(19) Europäisches Patentamt
European Patent Office
Office européen des brevets

(11) Veröffentlichungsnummer : **0 046 503**
**B1**

(12) # EUROPÄISCHE PATENTSCHRIFT

(45) Veröffentlichungstag der Patentschrift : **13.06.84**

(21) Anmeldenummer : **81105561.5**

(22) Anmeldetag : **15.07.81**

(51) Int. Cl.³ : **A 01 N 43/40** // (A01N43/40, 41/10, 37/44, 35/06)

(54) **Herbizide Mittel auf der Basis von Cyclohexan-1,3-dion-derivaten und 3,6-Dichlor-2-picolinsäurederivaten.**

(30) Priorität : **27.08.80 DE 3032259**

(43) Veröffentlichungstag der Anmeldung : **03.03.82 Patentblatt 82/09**

(45) Bekanntmachung des Hinweises auf die Patenterteilung : **13.06.84 Patentblatt 84/24**

(84) Benannte Vertragsstaaten : **AT BE CH DE FR GB IT LI LU NL SE**

(56) Entgegenhaltungen : **FR-A- 2 285 070**

(73) Patentinhaber : **BASF Aktiengesellschaft**
**Carl-Bosch-Strasse 38**
**D-6700 Ludwigshafen (DE)**

(72) Erfinder : **von der Osten, Eckhart**
**Friedrich-Sprater-Strasse 1**
**D-6720 Speyer (DE)**
Erfinder : **Stewart, James Frederick**
**III Mary Avenue**
**Cambridge, Ontario, N3H 4N6 (CA)**
Erfinder : **Bennett, John Melville**
**84 Beachwood Avenue**
**Willowdale, Ontario, M2L IJ5 (CA)**

**EP 0 046 503 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft herbizide Mittel, die Mischungen aus Cyclohexan-1,3-dion-derivaten und 3,6-Dichlor-2-picolinsäurederivaten enthalten, und Verfahren zur Bekämpfung unerwünschten Pflanzenwuchses mit diesen herbiziden Mitteln.

Cyclohexan-1,3-dion-derivate sind als Herbizide bekannt. Ihre Wirksamkeit konzentriert sich auf Ungräser und grasartige Kulturpflanzen. Gleichzeitig zeichnen sie sich durch eine sehr gute Verträglichkeit für breitblättrige Kulturpflanzen aus (DE-AS 24 39 104, DE-OS 28 22 304).

Außerdem sind die 3,6-Dichlor-2-picolinsäure sowie ihre Salze und Ester als Herbizide bekannt (DE-AS 12 28 848). Die Aktivität dieser Verbindungen richtet sich vorzugsweise gegen breitblättrige Pflanzen, wobei Pflanzen aus der Familie der Kruziferen geschont werden. Die Wirksamkeit gegenüber Grasarten ist dagegen gering (Herbicide Handbook of the Weed Science Society of America, 4. Auflage, 1979, S. 161).

Weiterhin sind aus der FR-A-22 85 070 herbizide Mittel bekannt, die Mischungen aus Cyclohexan-1,3-dionderivaten und herbiziden Wirkstoffen unterschiedlichster Wirkstoffklassen, allerdings keine Picolinsäurederivate, enthalten. Die Cyclohexan-1,3-dionderivate in diesen Mitteln, die in 4-, 5- oder 6-Stellung Substituenten, wie Alkyl, Alkoxycarbonyl, Halogen, Cyano oder gesättigte oder aromatische, nicht heterocyclische oder heterocyclische Substituenten tragen, zeigen bei gemeinsamer Anwendung mit den Mischungspartnern eine überadditive herbizide Wirkung.

Es wurde nun gefunden, daß herbizide Mittel, die eine Mischung aus einem Cyclohexan-1,3-dion-derivat der Formel I

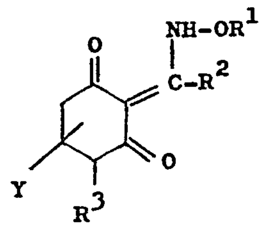

(I)

in der

$R^1$ einen unverzweigten oder verzweigten Alkylrest mit 1 bis 4 Kohlenstoffatomen, der durch Alkoxy, Alkylthio mit bis zu 4 Kohlenstoffatomen oder Alkoxycarbonyl mit bis zu 5 Kohlenstoffatomen substituiert sein kann, einen unverzweigten oder verzweigten Alkenyl- oder Alkinylrest mit bis zu 4 Kohlenstoffatomen oder Benzyl,

$R^2$ Wasserstoff oder einen unverzweigten oder verzweigten Alkylrest mit 1 bis 4 Kohlenstoffatomen,

$R^3$ Wasserstoff oder eine Alkoxycarbonylgruppe mit 2 bis 5 Kohlenstoffatomen und

Y den Rest $R^4SX$—, in dem

$R^4$ für eine Alkylgruppe mit bis zu 4 Kohlenstoffatomen, Phenyl, eine durch Halogen, Alkyl oder Alkoxy mit bis zu 4 Kohlenstoffatomen substituierte Phenyl- oder Benzylgruppe und

X für eine unverzweigte oder verzweigte Alkylengruppe mit bis zu 4 Kohlenstoffatomen stehen, bedeuten,

oder einem Metallsalz oder gegebenenfalls durch Alkyl oder Benzyl substituierten Ammoniumsalz oder einem Hydrat dieses Cyclohexan-1,3-dionderivats

und einem 3,6-Dichlor-2-picolinsäurederivat der Formel II

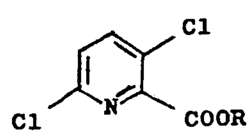

(II)

in der R Wasserstoff oder einen unverzweigten oder verzweigten Alkylrest mit 1 bis 4 Kohlenstoffatomen bedeutet, oder einem Metallsalz, dem Ammoniumsalz, einem Alkylammoniumsalz oder einem Hydroxyalkylammoniumsalz der Säure enthalten,

wirksamer sind als herbizide Mittel, die lediglich ein Cyclohexan-1,3-dion-derivat der Formel I oder ein 3,6-Dichlor-2-picolinsäurederivat der Formel II enthalten. Die Herbizidmischungen zeigen, insbesondere gegen grasartige Pflanzen, eine synergistische Wirkung.

Die Mischungskomponenten der Formel I sind Cyclohexan-1,3-dionderivate, bei denen

$R^1$ für einen unverzweigten oder verzweigten Alkylrest mit 1 bis 4 Kohlenstoffatomen, der durch Alkoxy, Alkylthio oder Alkoxycarbonyl mit bis zu 4 Kohlenstoffatomen substituiert sein kann, wie Methyl, Ethyl, n-Propyl, i-Propyl, n-Butyl, Methoxymethyl, Methoxyethyl, Butoxymethyl, Ethoxycarbonylmethyl, Methylthiomethyl, für einen unverzweigten oder verzweigten Alkenyl- oder Alkinylrest mit bis zu 4 Kohlenstoffatomen, wie Allyl, Propargyl oder für Benzyl,

$R^2$ für Wasserstoff oder einen unverzweigten oder verzweigten Alkylrest mit 1 bis 4 Kohlenstoffatomen, wie Methyl, Ethyl, n-Propyl, n-Butyl,

$R^3$ für Wasserstoff oder eine Alkoxycarbonylgruppe mit 2 bis 5 Kohlenstoffatomen, wie Methoxycarbonyl, Ethoxycarbonyl, und

Y für den Rest $R^4SX$— stehen. Der Rest $R^4SX$— befindet sich vorzugsweise in 5-Stellung am Cyclohexan-1,3-dionring. In diesem Rest stehen $R^4$ für eine Alkylgruppe mit bis zu 4 Kohlenstoffatomen, wie Methyl, Ethyl, n-Propyl, i-Propyl, n-Butyl, für Phenyl, eine durch Halogen, Alkyl oder Alkoxy mit bis zu 4 Kohlenstoffatomen substituierte Phenyl- oder Benzylgruppe, wie 4-Chlorphenyl, 2-Methylphenyl, 3-Methylphenyl, 4-Methylphenyl, 2,5-Dimethylphenyl, 2,4-Dichlorphenyl, 4-Methoxyphenyl, und X für eine Alkylengruppe mit bis zu 4 Kohlenstoffatomen, wie Methylen, Ethylen, Methylethylen, Ethylmethylen.

Die Verbindungen der Formel I können auch in Form von Metall- oder gegebenenfalls durch Alkyl oder Benzyl substituierten Ammoniumsalzen oder als Hydrate Verwendung finden. In Betracht kommen Metallsalze, wie Mangan-, Kupfer-, Zink-, Kobalt-, Eisen- oder Silbersalze, Alkalimetall- oder Erdalkalimetallsalze, z. B. Natrium-, Kalium-, Calcium- oder Bariumsalze, Ammoniumsalze oder durch Alkyl bzw. Benzyl substituierte Ammoniumsalze, wie Tetrabutylammonium-, Trimethylbutylammonium- oder Dimethyl-benzyl-hexadecylammoniumsalze.

Bevorzugte Mischungskomponenten der Formel I sind solche, bei denen $R^1$ eine Ethyl- oder Allylgruppe, $R^2$ eine Alkylgruppe mit 2 oder 3 Kohlenstoffatomen, $R^3$ Wasserstoff oder Methoxycarbonyl und Y den Rest $R^4SX$— in dem $R^4$ für eine Alkylgruppe mit 1 bis 3 Kohlenstoffatomen, für Phenyl oder für durch Chlor, Methyl oder Methoxy substituiertes Phenyl und X für eine Alkylengruppe mit 1 bis 3 Kohlenstoffatomen stehen, bedeuten.

Insbesondere bevorzugt ist 2-(1-Ethoxyaminobutyliden)-5-(2-ethylthio-propyl)-cyclohexan-1,3-dion oder Metallsalze, insbesondere Alkalimetallsalze, dieser Verbindung.

Geeignete Mischungskomponenten der Formel II sind 3,6-Dichlor-2-picolinsäure und ihre Salze oder $C_{1-4}$ Alkylester. Als Salze kommen Metallsalze, wie das Kupfer-, Eisen-, Zink-, Kobalt- oder Nickelsalz, Alkalimetall- oder Erdalkalimetallsalze, z. B. das Natrium-, Kalium-, Lithium-, Magnesium- oder Calciumsalz, das Ammoniumsalz, Alkylammoniumsalze oder Hydroxyalkylammoniumsalze, beispielsweise des Methylammonium-, Dimethylammonium-, Trimethylammonium-, Ethylammonium-, Triethylammonium, Hydroxyethylammonium-, 3-Hydroxypropyl-ammonium- oder das Bis-(2-hydroxypropyl)-ammoniumsalz, in Betracht. Von den Alkylestern mit 1 bis 4 Kohlenstoffatomen in der Alkylgruppe ist der Methylester bevorzugt.

Das Gewichtsverhältnis der Komponenten in der Mischung kann einen weiten Bereich umfassen. Die Wahl des Mischungsverhältnisses hängt in erster Linie von dem zu bekämpfenden Unkraut- bzw. Ungrasspektrum ab, ebenso vom Entwicklungsstadium der zu bekämpfenden Pflanzen bzw. davon, ob die herbiziden Mittel selektiv in krautigen Kulturpflanzen, auf mit Baum- oder Strauchwuchs besetzten Flächen oder zur totalen Vegetationsbekämpfung eingesetzt werden sollen. Das Mischungsverhältnis von Cyclohexan-1,3-dionderivat der Formel I zu 3,6-Dichlor-2-picolinsäure-derivat der Formel II liegt zwischen 1 : 0,06 und 1 : 5 Gewichtsteilen, vorzugsweise zwischen 1 : 0,06 und 1 : 3, insbesondere 1 : 0,25 und 1 : 3 Gewichtsteilen.

Die erforderliche Aufwandmenge an Wirkstoffmischung, die in Form der erfindungsgemäßen herbiziden Mittel ausgebracht wird, hängt von der Zusammensetzung des Pflanzenbestandes, den Entwicklungsstadien der Pflanzen und den klimatischen Verhältnissen des Einsatzortes ab. Im allgemeinen betragen die Aufwandmengen 0,1 bis 5 kg Wirkstoffmischung je ha und je Behandlung.

Als Kulturen, in denen die erfindungsgemäßen herbiziden Mittel angewandet werden können, kommen im wesentlichen diejenigen breitblättrigen Kulturen in Betracht, in denen Wirkstoff B bei den erforderlichen Aufwandmengen keine Schädigungen hervorruft, beispielsweise Raps und andere Kohlgewächse sowie Zucker- und Futterrüben (Beta-Rüben) und Lein.

Die erfindungsgemäßen Mittel können im Vor- und Nachauflaufverfahren von Kulturpflanzen und unerwünschten Pflanzen ausgebracht werden. Bevorzugt ist die Nachauflaufbehandlung der unerwünschten Pflanzen.

Die erfindungsgemäßen herbiziden Mittel werden beispielsweise in Form von direkt versprühbaren Lösungen, Pulvern, Suspensionen oder Dispersionen, Emulsionen Öldispersionen, Pasten, Stäubemitteln, Streumitteln, Granulaten durch Versprühen, Vernebeln, Verstäuben, Verstreuen oder Gießen angewendet. Die Anwendungsformen richten sich ganz nach den Verwendungszwecken ; sie sollten in jedem Fall möglichst die feinste Verteilung der Wirkstoffmischungen gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z. B. Benzol, Toluol, Xylol, Paraffin, Tetrahydronaphthalin, alkylierte Naphthaline oder deren Derivate, z. B. Methanol, Ethanol, Propanol, Butanol, Chloroform, Tetrachlorkohlenstoff, Cyclohexanol, Cyclohexanon, Chlorbenzol, Isophoron, stark polare Lösungsmittels, z. B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel

gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Die Formulierungen enthalten zwischen 0,1 und 95 Gew.% Wirkstoffmischung, vorzugsweise zwischen 0,5 und 90 Gew.%.

Beispiele für Formulierungen sind :

I. 20 Gewichtsteile einer Mischung aus vier Gewichtsteilen 2-(1-Ethoxyamino-butyliden)-5-(2-ethylthiopropyl)-cyclohexan-1,3-dion und einem Gewichtsteil des Monoethanolammoniumsalzes der 3,6-Dichlor-2-picolinsäure werden in einer Mischung gelöst, die aus 80 Gewichtsteilen Xylol, 10 Gewichtsteilen des Anlagerungsproduktes von 8 bis 10 Mol Ethylenoxid an 1 Mol Ölsäure-N-monoethanolamid, 5 Gewichtsteilen Calciumsalz der Dodecylbenzosulfonsäure und 5 Gewichtsteilen des Anlagerungsproduktes von 40 Mol Ethylenoxid an 1 Mol Ricinusöl besteht. Durch Ausgießen und feines Verteilen der Lösung in 100 000 Gewichtsteilen Wasser erhält man eine wäßrige Dispersion, die 0,02 Gew.% des Wirkstoffs enthält.

II. 20 Gewichtsteile einer Mischung aus einem Gewichtsteil 2-(1-Ethoxyaminobutyliden)-5-(2-ethylthiopropyl)-cyclohexan-1,3-dion und drei Gewichtsteilen 3,6-Dichlor-2-picolinsäure-methylester werden in einer Mischung gelöst, die aus 40 Gewichtsteilen Cyclohexanon, 30 Gewichtsteilen Isobutanol, 20 Gewichtsteilen des Anlagerungsproduktes von 7 Mol Ethylenoxid an 1 Mol Isooctylphenol und 10 Gewichtsteilen des Anlagerungsproduktes von 40 Mol Ethylenoxid an 1 Mol Ricinusöl besteht. Durch Eingießen und feines Verteilen der Lösung von 100 000 Gewichtsteilen Wasser erhält man eine wäßrige Dispersion, die 0,02 Gew.% des Wirkstoffs enthält.

Zur Verbreiterung des Wirkungsspektrums und zur Erzielung weiterer synergistischer Effekte können die erfindungsgemäßen herbiziden Mittel auch mit zahlreichen Vertretern anderer herbizider oder wachstumsregulierender Wirkstoffgruppen gemischt und gemeinsam ausgebracht werden. Beispielsweise kommen als Mischungspartner Diazine, 4H-3,1-Benzoxazinderivate, Benzothiadiazinone, 2,6-Dinitroaniline, N-Phenylcarbamate, Thiolcarbamate, Halogencarbonsäuren, Triazine, Amide, Harnstoffe, Diphenylether, Triazinone, Uracile, Benzofuranderivate und andere in Betracht. Eine Reihe von Wirkstoffen, welche zusammen mit den neuen Mitteln für verschiedenste Anwendungsbereiche sinnvolle Mischungen ergeben, werden beispielhaft aufgeführt :

5-Amino-4-chlor-2-phenyl-3(2H)-pyridazinon
5-Amino-4-brom-2-phenyl-3(2H)-pyridazinon
5-Amino-4-chlor-2-cyclohexyl-3(2H)-pyridazinon
5-Amino-4-brom-2-cyclohexyl-3(2H)-pyridazinon
5-Methylamino-4-chlor-2-(3-trifluormethylphenyl)-3(2H)-pyridazinon
5-Methylamino-4-chlor-2(3-α,α,β,β-tetrafluorethoxyphenyl)-3(2H)-pyridazinon
5-Dimethylamino-4-chlor-2-phenyl-3(2H)-pyridazinon
4,5-Dimethoxy-2-phenyl-3(2H)-pyridazinon
4,5-Dimethoxy-2-cyclohexyl-3(2H)-pyridazinon
4,5-Dimethoxy-2-(3-trifluormethylphenyl)-3(2H)-pyridazinon
5-Methoxy-4-chlor-2-(3-trifluormethylphenyl)-3(2H)-pyridazinon
5-Amino-4-brom-2-(3-methylphenyl)-3(2H)-pyridazinon

4,5-Dimethoxy-2-(3-α,α,β-trifluor-β-bromethoxyphenyl)-3-(2H)-pyridazinon

3-(1-Methylethyl)-1H-2,1,3-benzothiadiazin-4(3H)-on-2,2-dioxid und Salze
3-(1-Methylethyl)-8-chlor-1H-2,1,3-benzothiadiazin-4(3H)-on-2,2-dioxid und Salze
3-(1-Methylethyl)-8-fluor-1H-2,1,3-benzothiadiazin-4(3H)-on-2,2-dioxid und Salze
3-(1-Methylethyl)-8-methyl-1H-2,1,3-benzothiadiazin-4(3H)-on-2,2-dioxid und Salze

1-Methoxymethyl-3-(1-methylethyl)-2,1,3-benzothiadiazin-4(3H)-on-2,2-dioxid
1-Methoxymethyl-8-chlor-3-(1-methylethyl)-2,1,3-benzothiadiazin-4(3H)-on-2,2-dioxid
1-Methoxymethyl-8-fluor-3-(1-methylethyl)-2,1,3-benzothiadiazin-4(3H)-on-2,2-dioxid

1-Cyan-8-chlor-3-(1-methylethyl)-2,1,3-benzothiadiazin-4(3H)-on-2,2-dioxid
1-Cyan-8-fluor-3-(1-methylethyl)-2,1,3-benzothiadiazin-4(3H)-on-2,2-dioxid
1-Cyan-8-methyl-3-(1-methylethyl)-2,1,3-benzothiadiazin-4(3H)-on-2,2-dioxid
1-Cyan-3-(1-methylethyl)-2,1,3-benzothiadiazin-4(3H)-on-2,2-dioxid
1-Azidomethyl-3-(1-methylethyl)-2,1,3-benzothiadiazin-4(3H)-on-2,2-dioxid
3-(1-Methylethyl)-1H-pyridino-[3,2-e]2,1,3-thiadiazin-(4)-on-2,2-dioxid

N-(1-Ethylpropyl)-2,6-dinitro-3,4-dimethylanilin
N-(1-Methylethyl)-N-ethyl-2,6-dinitro-4-trifluormethylanilin
N-n-Propyl-N-β-chlorethyl-2,6-dinitro-4-trifluormethylanilin
N-n-Propyl-N-cyclopropylmethyl-2,6-dinitro-4-trifluormethyl-anilin

N-Bis-(n-propyl)-2,6-dinitro-3-amino-4-trifluormethylanilin
N-Bis-(n-propyl)-2,6-dinitro-4-methyl-anilin
N-Bis-(n-propyl)-2,6-dinitro-4-methylsulfonyl-anilin
N-Bis-(n-propyl)-2,6-dinitro-4-aminosulfonyl-anilin
N-Bis-(β-chlorethyl)-2,6-dinitro-4-methyl-anilin
N-Ethyl-N-(2-methylallyl)-2,6-dinitro-4-trifluormethylanilin

N-Methylcarbaminsäure-3,4-dichlorbenzylester
N-Methylcarbaminsäure-2,6-di-tert-butyl-4-methylphenylester
N-Phenylcarbaminsäure-isopropylester
N-3-Fluorphenylcarbaminsäure-2-methoxy-1-methylethylester
N-3-Chlorphenylcarbaminsäure-isopropylester
N-3-Chlorphenylcarbaminsäure-1-methyl-2-propinylester
N-3-Chlorphenylcarbaminsäure-4-chlor-butin-2-yl-1-ester
N-3,4-Dichlorphenylcarbaminsäure-methylester
N-(4-Amino-benzolsulfonyl)-carbaminsäure-methylester
O-(N-Phenylcarbamoyl)-propanonoxim
N-Ethyl-2-(phenylcarbamoyl-oxy) propionsäureamid
3'-N-Isopropyl-carbamoyloxy-propionanilid
Ethyl-N-(3-N'-phenylcarbamoyloxy)-phenyl)-carbamat
Methyl-N-(3-(N'-methyl-N'-phenylcarbamoyloxy)-phenyl)-carbamat
Isopropyl-N-(3-(N'-ethyl-N'-phenylcarbamoyloxy)-phenyl)-carbamat
Methyl-N-(3-(N'-3-methylphenylcarbamoyloxy)-phenyl)-carbamat
Methyl-N-(3-(N'-4-fluorphenylcarbamoyloxy)-phenyl)-carbamat
Methyl-N-(3-(N'-3-chlor-4-fluorphenylcarbamoyloxy)-phenyl)-carbamat
Methyl-N-dichlorfluormethylsulfenyl-(3-(N'-dichlorfluormethylsulfenyl-N'-phenylcarbamoyl-oxy)-phenyl)-carbamat
Methyl-N-dichlorfluormethylsulfenyl-(3-(N'-dichlorfluormethylsulfenyl-N'-3-methylphenylcarbamoyl-oxy)-phenyl-carbamat

Ethyl-N-(3-N'-3-chlor-4-fluorphenylcarbamoyloxy)-phenyl)-carbamat
Ethyl-N-(3-N'-3,4-difluorphenylcarbamoyloxy)-phenyl)-carbamat
Methyl-N-(3-(N'-3,4-difluorphenylcarbamoyloxy)-phenyl)-carbamat
N-3-(4-Fluorphenoxycarbonylamino)-phenyl-carbaminsäuremethylester
N-3-(2-Methylphenoxycarbonylamino)-phenyl-carbaminsäureethylester
N-3-(4-Fluorphenoxycarbonylamino)-phenyl-thiolcarbaminsäuremethylester
N-3-(2,4,5-Trimethylphenoxycarbonylamino)-phenyl-thiolcarbaminsäure-methylester
N-3-(Phenoxycarbonylamino)-phenyl-thiolcarbaminsäure-methylester
N,N-Diethyl-thiolcarbaminsäure-p-chlorbenzylester
N,N-Di-n-propyl-thiolcarbaminsäure-ethylester
N,N-Di-n-propyl-thiolcarbaminsäure-n-propylester
N,N-Di-isopropyl-thiolcarbaminsäure-2,3-dichlorallylester
N,N-Di-isopropyl-thiolcarbaminsäure-2,3,3-trichlorallylester
N,N-Di-isopropyl-thiolcarbaminsäure-3-methyl-5-isoxazolylmethylester
N,N-Di-isopropyl-thiolcarbaminsäure-3-ethyl-5-isoxazolylmethylester
N,N-Di-sec.-butyl-thiolcarbaminsäure-ethylester
N,N-Di-sec.-butyl-thiolcarbaminsäure-benzylester
N-Ethyl-N-cyclohexyl-thiolcarbaminsäure-ethylester
N-Ethyl-N-bicyclo[2.2.1]heptyl-thiolcarbaminsäureethylester

S-(2,3-Dichlorallyl)-(2,2,4-trimethyl-1-azetidin)-carbothiolat
S-(2,3,3-Trichlorallyl)-(2,2,4-trimethyl-1-azetidin)-carbothiolat
S-Ethyl-hexahydro-1-H-azepin-1-carbothiolat

S-Benzyl-(3-methyl-hexahydro-1-H-azepin-1)-carbothiolat
S-Benzyl-(2,3-dimethylhexahydro-1-H-azepin-1)-carbothiolat
S-Ethyl-(3-methylhexahydro-1-H-azepin-1)-carbothiolat
N-Ethyl-N-n-butyl-thiocarbaminsäure-n-propylester
N,N-Dimethyl-dithiocarbaminsäure-2-chlorallylester
N-Methyl-dithiocarbaminsäure-Natriumsalz
Trichloressigsäure-Natriumsalz
α,α-Dichlorpropionsäure-Natriumsalz
α,α-Dichlorbuttersäure-Natriumsalz
α,α,β,β-Tetrafluorpropionsäure-Natriumsalz
α-Methyl-α,β-dichlorpropionsäure-Natriumsalz
α-Chlor-β-(4-chlorphenyl)-propionsäure-methylester
α,β-Dichlor-β-phenylpropionsäure-methylester
Benzamido-oxy-essigsäure
2,3,5-Trijodbenzoesäure (Salze, Ester, Amide)
2,3,6-Trichlorbenzoesäure (Salze, Ester, Amide)
2,3,5,6-Tetrachlorbenzoesäure (Salze, Ester, Amide)
2-Methoxy-3,6-dichlorbenzoesäure (Salze, Ester, Amide)
2-Methoxy-3,5,6-trichlorbenzoesäure (Salze, Ester, Amide)
3-Amino-2,5,6-trichlorbenzoesäure (Salze, Ester, Amide)
O,S-Dimethyl-tetrachlor-thioterephthalat
Dimethyl-2,3,5,6-tetrachlor-terephthalat
Di-natrium-3,6-endoxohexahydro-phthalat
4-Amino-3,5,6-trichlor-picolinsäure (Salze)
2-Cyan-3-(N-methyl-N-phenyl)-amino-acrylsäureethylester
2-[4-(4'-Chlorphenoxy)-phenoxy]-propionsäureisobutylester
2-[4-(2',4'-Dichlorphenoxy)-phenoxy]-propionsäuremethylester
2-[4-(4'-Trifluormethylphenoxy)-phenoxy]-propionsäuremethylester
2-[4-(2'-Chlor-4'-trifluorphenoxy)-phenoxy]-propionsäure-Natriumsalz
2-[4-(3',5'-Dichlorpyridyl-2-oxy)-phenoxy]-propionsäure-Natriumsalz
2-(N-Benzoyl-3,4-dichlorphenylamino)-propionsäureethylester
2-(N-Benzoyl-3-chlor-4-fluorphenylamino)-propionsäuremethylester
2-(N-Benzoyl-3-chlor-4-fluorphenylamino)-propionsäureisopropylester
4-(4'-Trifluormethyl-phenoxy)-penten-2-carbonsäureethylester
2-Chlor-4-ethylamino-6-isopropylamino-1,3,5-triazin
2-Chlor-4-ethylamino-6-(amino-2'-propionitril)-1,3,5-triazin
2-Chlor-4-ethylamino-6-(2-methoxypropyl)-2-amino-1,3,5-triazin
2-Chlor-4-ethylamino-6-butin-1-yl-2-amino-1,3,5-triazin
2-Chlor-4,6-bisethylamino-1,3,5-triazin
2-Chlor-4,6-bisisopropylamino-1,3,5-triazin
2-Chlor-4-isopropylamino-6-cyclopropylamino-1,3,5-triazin
2-Azido-4-methylamino-6-isopropylamino-1,3,5-triazin
2-Methylthio-4-ethylamino-6-isopropylamino-1,3,5-triazin
2-Methylthio-4-ethylamino-6-tert-butylamino-1,3,5-triazin
2-Methylthio-4,6-bisethylamino-1,3,5-triazin
2-Methylthio-4,6-bisisopropylamino-1,3,5-triazin
2-Methoxy-4-ethylamino-6-isopropylamino-1,3,5-triazin
2-Methoxy-4,6-bisethylamino-1,3,5-triazin
2-Methoxy-4,6-bisisopropylamino-1,3,5-triazin
4-Amino-6-tert.-butyl-3-methylthio-4,5-dihydro-1,2,4-triazin-5-on
4-Amino-6-phenyl-3-methyl-4,5-dihydro-1,2,4-triazin-5-on
4-Isobutylidenamino-6-tert.butyl-3-methylthio-4,5-dihydro-1,2,4-triazin-5-on
1-Methyl-3-cyclohexyl-6-dimethylamino-1,3,5-triazin-2,4-dion
3-tert.-Butyl-5-chlor-6-methyluracil
3-tert.-Butyl-5-brom-6-methyluracil
3-Isopropyl-5-brom-6-methyluracil
3-sec.-Butyl-5-brom-6-methyluracil
3-(2-Tetrahydropyranyl)-5-chlor-6-methyluracil
3-(2-Tetrahydropyranyl)-5,6-trimethylenuracil
3-Cyclohexyl-5,6-trimethylenuracil
2-Methyl-4-(3'-trifluormethylphenyl)-tetrahydro-1,2,4-oxadiazin-3,5-dion
2-Methyl-4-(4'-fluorphenyl)-tetrahydro-1,2,4-oxadiazin-3,5-dion
3-Amino-1,2,4-triazol
1-Allyloxy-1-(4-bromphenyl)-2-[1',2',4'-triazolyl-(1')]-ethan (Salze)
1-(4-Chlorphenoxy)-3,3-dimethyl-1-(1H-1,2,4-triazol-1-yl)-butan-2-on

N,N-Diallylchloracetamid
N-Isopropyl-2-chloracetanilid
N-(1-Methyl-2-propinyl)-2-chloracetanilid
2-Methyl-6-ethyl-N-(propargyl)-2-chloracetanilid
2-Methyl-6-ethyl-N-(ethoxymethyl)-2-chloracetanilid
2-Methyl-6-ethyl-N-(2-methoxy-1-methylethyl)-2-chloracetanilid
2-Methyl-6-ethyl-N-(isopropoxycarbonylethyl)-2-chloracetanilid
2-Methyl-6-ethyl-N-(4-methoxypyrazol-1-yl-methyl)-2-chloracetanilid
2-Methyl-6-ethyl-N-(pyrazol-1-yl-methyl)-2-chloracetanilid
2,6-Dimethyl-N-(pyrazol-1-yl-methyl)-2-chloracetanilid
2,6-Dimethyl-N-(4-methylpyrazol-1-yl-methyl)-2-chloracetatanilid
2,6-Dimethyl-N-(1,2,4-triazol-1-yl-methyl)-2-chloracetanilid
2,6-Dimethyl-N-(3,5-dimethylpyrazol-1-yl-methyl)-2-chloracetanilid
2,6-Dimethyl-N-(1,3-dioxolan-2-yl-methyl)-2-chloracetanilid
2,6-Dimethyl-N-(2-methoxyethyl)-2-chloracetanilid
2,6-Dimethyl-N-isobutoxymethyl-2-chloracetanilid
2,6-Diethyl-N-methoxymethyl-2-chloracetanilid
2,6-Diethyl-N-(n-butoxymethyl)-2-chloracetanilid
2,6-Diethyl-N-ethoxycarbonylmethyl-2-chloracetanilid
2,3,6-Trimethyl-N-(pyrazol-1-yl-methyl)-2-chloracetanilid
2,3-Dimethyl-N-isopropyl-2-chloracetanilid
2,6-Diethyl-N-(2-n-propoxyethyl)-2-chloracetanilid
2-(2-Methyl-4-chlorphenoxy)-N-methoxy-acetamid
2-(α-Naphthoxy)-N,N-diethylpropionamid
2,2-Diphenyl-N,N-dimethylacetamid
N-Benzyl-N-isopropyl-trimethylacetamid
α-(3,4,5-Tribrompyrazol-1-yl)-N,N-dimethylpropionamid
N-(1,1-Dimethylpropinyl)-3,5-dichlorbenzamid
N-1-Naphthylphthalamidsäure
Propionsäure-3,4-dichloranilid
Cyclopropancarbonsäure-3,4-dichloranilid
Methacrylsäure-3,4-dichloranilid
2-Methylpentancarbonsäure-3,4-dichloranilid
5-Acetamido-2,4-dimethyl-trifluormethansulfonanilid
5-Acetamido-4-methyl-trifluormethansulfonanilid
N-4-Methyl-5-(trifluormethyl)-sulfonylamino-phenylacetamid
2-Propionyl-amino-4-methyl-5-chlor-thiazol
O-(Methylsulfonyl)-glykolsäure-N-ethoxymethyl-2,6-dimethylanilid
O-(Methylaminosulfonyl)-glykolsäure-N-isopropyl-anilid
O-(i-Propylaminosulfonyl)-glykolsäure-N-butin-1-yl-3-anilid
O-(Methylaminosulfonyl)-glykolsäure-hexamethylenimid
2,6-Dichlor-thiobenzamid
2,6-Dichlorbenzonitril
3,5-Dibrom-4-hydroxy-benzonitril (Salze)
3,5-Dijod-4-hydroxy-benzonitril (Salze)
3,5-Dibrom-4-hydroxy-0,2,4-dinitrophenylbenzaldoxim (Salze)
3,5-Dibrom-4-hydroxy-0-2-cyan-4-nitrophenylbenzaldoxim (Salze)
Pentachlorphenol-Natriumsalz
2,5-Dichlorphenyl-4′-nitrophenylether
2,4,6-Trichlorphenyl-4′-nitrophenylether
2-Fluor-4,6-dichlorphenyl-4′-nitrophenylether
2-Chlor-4-trifluormethylphenyl-4′-nitrophenylether
2,4′-Dinitro-4-trifluormethyl-diphenylether
2,4-Dichlorphenyl-3′-methoxy-4′-nitro-phenylether
2-Chlor-4-trifluormethylphenyl-3′-ethoxy-4′-nitro-phenylether
2-Chlor-4-trifluormethylphenyl-3′-carboxy-4′-nitro-phenylether (Salze)
2-Chlor-4-trifluormethylphenyl-3′-ethoxycarbonyl-4′-nitrophenylether
2-Chlor-4-trifluormethylphenyl-3′-(2-fluorethoxy)-4′-nitrophenylether
2-Chlor-4-trifluormethylphenyl-3′-ethoxycarbonyl-methylthio-4′-nitrophenylether
2-Chlor-4-trifluormethyl-3′-methoxycarbonyl-4′-nitrophenylether
2,4,6-Trichlorphenyl-3-ethoxycarbonyl-methylthio-4′-nitrophenylether
2,4-Dichlorphenyl-3′-methoxycarbonyl-4′-nitro-phenylether
2,4-Dichlorphenyl-3′-carboxy-4′-nitrophenylether
2-(3,4-Dichlorphenyl)-4-methyl-1,2,4-oxadiazolidin-3,5-dion
2-(3-tert.-Butylcarbamoyloxy-phenyl)-4-methyl-1,2,4-oxadiazolidin-3,5-dion

2-(3-i-Propylcarbamoyloxy-phenyl)-4-methyl-1,2,4-oxadiazolidin-3,5-dion
2-Phenyl-3,1-benzoxazinon-(4)
(4-Bromphenyl)-3,4,5,9,10-pentaazatetracyclo-[5,4,1,$0^{2,6}$,$0^{8,11}$]-dodeca-3,9-dien
2-Ethoxy-2,3-dihydro-3,3-dimethyl-5-benzofuranyl-methansulfonat
2-Ethoxy-2,3-dihydro-3,3-dimethyl-5-benzofuranyl-dimethylaminosulfat
2-Ethoxy-2,3-dihydro-3,3-dimethyl-5-benzofuranyl-(N-methyl-N-acetyl)-aminosulfonat
3,4-Dichlor-1,2-benzisothiazol
N-4-Chlorphenyl-allylbernsteinsäureimid
2-Methyl-4,6-dinitrophenol (Salze, Ester)
2-sec.-Butyl-4,6-dinitrophenol (Salze, Ester)
2-sec.-Butyl-4,6-dinitrophenol-acetat
2-tert.-Butyl-4,6-dinitrophenol-acetat
2-tert.-Butyl-4,6-dinitrophenol (Salze)
2-tert.-Butyl-5-methyl-4,6-dinitrophenol (Salze)
2-tert.-Butyl-5-methyl-4,6-dinitrophenol-acetat
2-sec.-Amyl-4,6-dinitrophenol (Salze, Ester)
1-(α,α-Dimethylbenzyl)-3-(4-methylphenyl)-harnstoff
1-Phenyl-3-(2-methylcyclohexyl)-harnstoff
1-Phenyl-1-benzoyl-3,3-dimethyl-harnstoff
1-(4-Chlorphenyl)-1-benzoyl-3,3-dimethyl-harnstoff
1-(4-Chlorphenyl)-3,3-dimethyl-harnstoff
1-(4-Chlorphenyl)-3-methyl-3-(1-methyl-2-propinyl)-harnstoff
1-(3,4-Dichlorphenyl)-3,3-dimethyl-harnstoff
1-(3,4-Dichlorphenyl)-1-benzoyl-3,3-dimethyl-harnstoff
1-(3,4-Dichlorphenyl)-3-methyl-3-n-butyl-harnstoff
1-(4-i-Propylphenyl)-3,3-dimethyl-harnstoff
1-(3-Trifluormethylphenyl)-3,3-dimethyl-harnstoff
1-(3-α,α,β,β-Tetrafluorethoxyphenyl)-3,3-dimethyl-harnstoff
1-(3-tert.-Butylcarbamoyloxy-phenyl)-3,3-dimethyl-harnstoff
1-(3-Chlor-4-methylphenyl)-3,3-dimethyl-harnstoff
1-(3-Chlor-4-methoxyphenyl)-3,3-dimethyl-harnstoff
1-(3,5-Dichlor-4-methoxyphenyl)-3,3-dimethyl-harnstoff
1-[4-(4'-Chlorphenoxy)-phenyl]-3,3-dimethyl-harnstoff
1-[4-(4'-Methoxyphenoxy)-phenyl]-3,3-dimethyl-harnstoff
1-Cyclooctyl-3,3-dimethyl-harnstoff
1-(Hexahydro-4,7-methanoindan-5-yl)-3,3-dimethyl-harnstoff
1-[1- oder 2-(3a,4,5,7,7a-Hexahydro)-4,7-methanoindanyl]-3,3-dimethyl-harnstoff
1-(4-Fluorphenyl)-3-carboxymethoxy-3-methyl-harnstoff
1-Phenyl-3-methyl-3-methoxy-harnstoff
1-(4-Chlorphenyl)-3-methyl-3-methoxy-harnstoff
1-(4-Bromphenyl)-3-methyl-3-methoxy-harnstoff
1-(3,4-Dichlorphenyl)-3-methyl-3-methoxy-harnstoff
1-(3-Chlor-4-bromphenyl)-3-methyl-3-methoxy-harnstoff
1-(3-Chlor-4-isopropylphenyl)-3-methyl-3-methoxy-harnstoff
1-(3-Chlor-4-methoxyphenyl)-3-methyl-3-methoxy-harnstoff
1-(3-tert.-Butylphenyl)-3-methyl-3-methoxy-harnstoff
1-(2-Benzthiazolyl)-1,3-dimethyl-harnstoff
1-(2-Benzthiazolyl)-3-methyl-harnstoff
1-(5-Trifluormethyl-1,3,4-thiadiazolyl)-1,3-dimethylharnstoff
1-(4-Benzyloxyphenyl)-3-methyl-3-methoxy-harnstoff
Imidazolidin-2-on-1-carbonsäure-isobutylamid
1,2-Dimethyl-3,5-diphenylpyrazolium-methylsulfat
1,2-4-Trimethyl-3,5-diphenylpyrazolium-methylsulfat
1,2-Dimethyl-4-brom-3,5-diphenylpyrazolium-methylsulfat
1,3-Dimethyl-4-(3,4-dichlorbenzoyl)-5-[(4-methylphenyl)-sulfonyloxy]-pyrazol
1-Acetyl-3-anilino-4-methoxycarbonyl-5-methyl-pyrazol
3-Anilino-4-methoxycarbonyl-5-methyl-pyrazol
3-tert.-Butylamino-4-methoxycarbonyl-5-methyl-pyrazol
2,3,5-Trichlor-pyridinol-(4)
1-Methyl-3-phenyl-5-(3'-trifluormethylphenyl)-pyridon-(4)
1-Methyl-4-phenyl-pyridiniumchlorid
1,1-Dimethylpyridiniumchlorid
3-Phenyl-4-hydroxy-6-chlorpyridazin
1,1'-Dimethyl-4,4'-dipyridylium-di-methylsulfat
1,1'-Di-(3,5-dimethylmorpholin-carbonylmethyl)-4,4'-dipyridylium-dichlorid

1,1'-Ethylen-2,2'-dipyridylium-dibromid
2-Chlorphenoxyessigsäure (Salze, Ester, Amide)
4-Chlorphenoxyessigsäure (Salze, Ester, Amide)
2,4-Dichlorphenoxyessigsäure (Salze, Ester, Amide)
2,4,5-Trichlorphenoxyessigsäure (Salze, Ester, Amide)
2-Methyl-4-chlorphenoxyessigsäure (Salze, Ester, Amide)
3,5,6-Trichlor-2-pyridinyl-oxyessigsäure (Salze, Ester, Amide)
α-Naphthoxyessigsäuremethylester
2-[4-(5'-Brompyridyl-2-oxy)-phenoxy]-propionsäureethylester
2-[4-(5'-Iodpyridyl-2-oxy)-phenoxy]-propionsäureethylester
2-[4-(5'-Iodpyridyl-2-oxy)-phenoxy]-propionsäure-n-butylester
2-(2-Methylphenoxy)-propionsäure (Salze, Ester, Amide)
2-(4-Chlorphenoxy)-propionsäure (Salze, Ester, Amide)
2-(2,4-Dichlorphenoxy)-propionsäure (Salze, Ester, Amide)
2-(2,4,5-Trichlorphenoxy)-propionsäure (Salze, Ester, Amide)
2-(2-Methyl-4-chlorphenoxy)-propionsäure (Salze, Ester, Amide)
2-[4-(4'-Chlorphenoxymethyl)-phenoxy]-propionsäuremethylester
4-(2,4-Dichlorphenoxy)-buttersäure (Salze, Ester, Amide)
4-(2-Methyl-4-chlorphenoxy)-buttersäure (Salze, Ester, Amide)
Cyclohexyl-3-(2,4-dichlorphenoxy)-acrylat
9-Hydroxyfluoren-carbonsäure-(9) (Salze, Ester)
2,3,6-Trichlorphenyl-essigsäure (Salze, Ester)
4-Chlor-2-oxo-benzothiazolin-3-yl-essigsäure (Salze, Ester)
Gibellerinsäure (Salze)
Dinatrium-methylarsonat
Mononatriumsalz der Methylarsonsäure
N-Phosphon-methyl-glycin (Salze)
N,N-Bis-(phosphonmethyl)-glycin (Salze)
2-Chlorethanphosphonsäure-2-chlorethylester
Ammonium-ethyl-carbamoyl-phosphonat
Di-n-butyl-1-n-butylamino-cyclohexyl-phosphonat
Trithiobutylphosphit
O,O-Diisopropyl-5-(2-benzosulfonylamino-ethyl)-phosphordithionat
2,3-Dihydro-5,6-dimethyl-1,4-dithiin-1,1,4,4-tetraoxid
5-tert.-Butyl-3-(2,4-dichlor-5-isopropoxyphenyl)-1,3,4-oxadiazolon-(2)
4,5-Dichlor-2-trifluormethyl-benzimidazol (Salze)
1,2,3,6-Tetrahydropyridazin-3,6-dion (Salze)
Bernsteinsäure-mono-N-dimethylhydrazid (Salze)
(2-Chlorethyl)-trimethyl-ammoniumchlorid
(2-Methyl-4-phenylsulfonyl)-trifluormethansulfonanilid
1,1-Dimethyl-4,6-diisopropyl-5-indanylethylketon
2-[1-(2,5-Dimethylphenyl)-ethylsulfonyl]-pyridin-N-oxid
Natriumchlorat
Ammoniumrhodanid
Calciumcyanamid

Außerdem ist es nützlich, die erfindungsgemäßen Mittel allein oder in Kombination mit anderen Herbiziden auch noch mit weiteren Pflanzenschutzmitteln gemischt gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- oder Spurenelementmängeln eingesetzt werden.

Zur Aktivierung der herbiziden Wirkung können auch Netz- und Haftmittel sowie nicht-phytotoxische Öle und Ölkonzentrate zugesetzt werden.

Durch Gewächshaus- und Freilandversuche wird die durch die kombinierte Anwendung von substituierten Cyclohexan-1,3-dionderivaten der Formel I und 3,6-Dichlor-2-picolinsäurederivaten der Formel II in den erfindungsgemäßen herbiziden Mitteln erzielte synergistische Wirkungssteigerung belegt.

Folgende Wirkstoffe wurden verwendet:

2-(1-Ethoxyaminobutyliden)-5-(2-ethylthiopropyl)-cyclohexan-1,3-dion (Wirkstoff A) und das Monoethanolammoniumsalz der 3,6-Dichlor-2-picolinsäure (Wirkstoff B).

Für die Gewächshausversuche dienten Plastikblumentöpfe von 300 $cm^3$ Inhalt, gefüllt mit lehmigem Sand mit etwa 1,5 % Humus als Substrat, als Kulturgefäße. Die Samen der Testpflanzen wurden nach Arten getrennt flach eingesät. Für die Nachauflaufbehandlung zog man die Testpflanzen je nach Wuchsform bis zu einer Höhe von 3 bis 10 cm an. Danach wurden die Wirkstoffe bzw. die Wirkstoffmischungen beispielsweise in einer Aufwandmenge von 0,03 kg/ha Aktivsubstanz aufgebracht. Die

Wirkstoffe werden, in Wasser als Verteilungsmittel suspendiert oder emulgiert bzw. gelöst, mittels fein verteilender Düsen verspritzt.

Als Freilandversuche wurden Kleinparzellenversuche an verschiedenen Orten angelegt. Die in den Tabellen 2 und 3 aufgeführten Versuchsergebnisse sind Durchschnittswerte dieser Versuche.

Bei den Freilandversuchen entsprechend Tabelle 2 wurden die Wirkstoffe bzw. Wirkstoffmischungen in 750 Liter Wasser/ha als Träger- und Verteilungsmittel auf Echinochloa crus-galli im 3- bis 5-Blattstadium ausgebracht.

Bei den Freilandversuchen entsprechend Tabelle 3 wurden die Wirkstoffe bzw. Wirkstoffmischungen in 100 Liter Wasser/ha als Träger- und Verteilungsmittel ausgebracht. Außerdem wurde als Netzmittel (surfactant) Atplus 411 F+, zugesetzt, das sich im wesentlichen aus Polyethylenoxidsorbat und dem Mineralöl Sun Oil 11 D, einem Handelsprodukt der Firma Sun Oil, zusammensetzt. Die Gräser wurden behandelt, wenn sie durchschnittlich 3 bis 5 Blätter entwickelt hatten.

Die Schädigung der Pflanzen wurde nach einer Skala von 0 bis 100 beurteilt. Dabei bedeutet 0 keine Schädigung und normales Wachstum und 100 eine völlige Zerstörung zumindest der oberirdischen Sproßteile.

Die Versuche zeigen, daß die herbizide Aktivität des Wirkstoffs A durch die kombinierte Anwendung mit Wirkstoff B, der bei einer Aufwandmenge von 0,3 kg/ha keine Wirkung gegen Grasarten zeigt, in überraschender Weise gesteigert wird. Setzt man im Freiland beispielsweise die unwirksame Menge von 0,3 kg/ha an Wirkstoff B der Aufwandmenge von 0,15 kg/ha an Wirkstoff A, mit der die Pflanzen zu einem geringen Prozentsatz geschädigt werden, zu, so erreicht man eine unerwartet hohe Schädigung der Grasarten (Tabelle 2). Dasselbe trifft auch zu, wenn man 0,06 kg/ha des Wirkstoffes A mit 0,06 kg/ha des Wirkstoffes B oder 0,125 kg/ha des Wirkstoffes A mit der gleichen Menge des Wirkstoffes B mischt (Tabelle 1). Einen ebenso überraschenden Effekt erhält man, wenn man im Gewächshaus die geringe Menge von 0,03 kg/ha des Wirkstoffes A mit ebenfalls 0,03 kg/ha des Wirkstoffes B gemeinsam ausbringt. Die Kulturpflanzen Zuckerrüben und Raps werden wenig bzw. gar nicht geschädigt (Tabelle 3).

Bei den Versuchen wurden die folgenden Pflanzen getestet : Flughafer (Avena fatua), Zuckerrüben (Beta vulgaris), Raps (Brassica napus), Hühnerhirse (Echinochloa crus-galli), Gerste (hier Ausfallgerste ; Hordeum vulgare), Weizen (hier Ausfallweizen ; Triticum aestivum).

+ Warenzeichen der Atlas Chemical Industries, Inc.

Tabelle 1. Synergistische herbizide Wirkung der erfindungsgemäßen Mittel bei Nachauflaufanwendung im Freiland

| Herbizide Wirkstoffe | Aufwandmenge [kg a.S./ha] | Schädigung [%] von Echinochloa crus-galli |
|---|---|---|
| A | 0,06 | 65 |
| | 0,125 | 80 |
| B | 0,06 | 0 |
| | 0,125 | 0 |
| A + B | 0,06 + 0,06 | 95 |
| | 0,125 + 0,125 | 100 |

Tabelle 2. Herbizide Wirksamkeit der erfindungsgemäßen Mittel gegen Grasarten bei Nachauflaufanwendung im Freiland

| Herbizide Wirkstoffe+ | Aufwandmenge [kg a.S./ha] | Testpflanzen und Schädigung [%] Ausfallgerste | Ausfallweizen | Flughafer |
|---|---|---|---|---|
| A | 0,15 | 31 | 34 | 38 |
| | 0,25 | 74 | 80 | 72 |
| B | 0,3 | 0 | 0 | 0 |
| A + B | 0,15 + 0,3 | 78 | 76 | 74 |
| | 0,25 + 0,3 | 88 | 94 | 88 |

0 = keine Schädigung, 100 = Pflanzen abgestorben

+ = alle Behandlungen dieser Tabelle enthielten einen Zusatz von 0,5 l/ha Netzmittel Atplus 411 F

Tabelle 3. Selektive Bekämpfung von Flughafer in Kulturpflanzen mit erfindungsgemäßen Herbizidmischungen bei Nachauflaufanwendung im Gewächshaus

| Herbizide Wirkstoff | Aufwandmenge [kg a.S./ha] | Testpflanzen und Schädigung [%] Beta vulgaris | Brassica napus | Avena fatua |
|---|---|---|---|---|
| A | 0,03 | 0 | 0 | 65 |
| B | 0,03 | 0 | 0 | 5 |
| A + B | 0,03 + 0,03 | 5 | 0 | 80 |

**Ansprüche**

1. Herbizide Mittel, enthaltend eine Mischung aus einem Cyclohexan-1,3-dion-derivat der Formel I

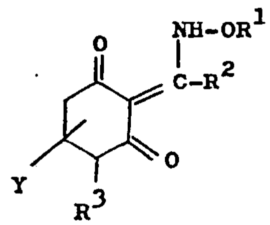

(I)

in der

$R^1$ einen unverzweigten oder verzweigten Alkylrest mit 1 bis 4 Kohlenstoffatomen, der durch Alkoxy, Alkylthio mit bis zu 4 Kohlenstoffatomen oder Alkoxycarbonyl mit bis zu 5 Kohlenstoffatomen substituiert sein kann, einen unverzweigten oder verzweigten Alkenyl- oder Alkinylrest mit bis zu 4 Kohlenstoffatomen oder Benzyl,

$R^2$ Wasserstoff oder einen unverzweigten oder verzweigten Alkylrest mit 1 bis 4 Kohlenstoffatomen,

$R^3$ Wasserstoff oder eine Alkoxycarbonylgruppe mit 2 bis 5 Kohlenstoffatomen und

Y den Rest $R^4SX$—, in dem

$R^4$ für eine Alkylgruppe mit bis zu 4 Kohlenstoffatomen, Phenyl, eine durch Halogen, Alkyl oder Alkoxy mit bis zu 4 Kohlenstoffatomen substituierte Phenyl- oder Benzylgruppe und

X für eine unverzweigte oder verzweigte Alkylengruppe mit bis zu 4 Kohlenstoffatomen stehen, bedeuten

oder einem Metallsalz oder gegebenenfalls durch Alkyl oder Benzyl substituierten Ammoniumsalz oder einem Hydrat dieses Cyclohexan-1,3-dionderivats und einem 3,6-Dichlor-2-picolinsäurederivat der Formel II

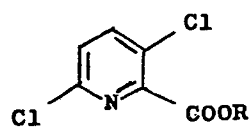

(II)

in der

R Wasserstoff oder einem unverzweigten oder verzweigten Alkylrest mit 1 bis 4 Kohlenstoffatomen bedeutet, oder einem Metallsalz, dem Ammoniumsalz, einem Alkylammoniumsalz oder einem Hydroxyalkylammoniumsalz der Säure.

2. Herbizide Mittel gemäß Anspruch 1, dadurch gekennzeichnet, daß sie als Cyclohexan-1,3-dionderivat der Formel I 2-(1-Ethoxyaminobutyliden)-5-(2-ethylthiopropyl)-cyclohexan-1,3-dion enthalten.

3. Herbizide Mittel gemäß Anspruch 1, dadurch gekennzeichnet, daß sie als 3,6-Dichlor-2-picolinsäurederivat der Formel II das Monoethanolammoniumsalz der 3,6-Dichlor-2-picolinsäure enthalten.

4. Herbizide Mittel gemäß Anspruch 1, dadurch gekennzeichnet, daß das Mischungsverhältnis von Cyclohexan-1,3-dion-derivat der Formel I : 3,6-Dichlor-2-picolinsäurederivat der Formel II 1 : 0,06 bis 1 : 5 Gewichtsteilen beträgt.

5. Herbizide Mittel gemäß Anspruch 1, dadurch gekennzeichnet, daß das Mischungsverhältnis von Cyclohexan-1,3-dion-derivat der Formel I : 3,6-Dichlor-2-picolinsäurederivat der Formel II 1 : 0,25 bis 1 : 3 Gewichtsteilen beträgt.

6. Verfahren zur Bekämpfung unerwünschten Pflanzenwachstums, dadurch gekennzeichnet, daß man den Standort der unerwünschten Pflanzen vor dem Auflaufen der Pflanzen oder die Pflanzen nach dem Auflaufen mit einer herbizid wirksamen Menge eines herbiziden Mittels gemäß Anspruch 1 behandelt.

7. Verwendung von herbiziden Mitteln gemäß Anspruch 1 zur Bekämpfung unerwünschten Pflanzenwuchses.

**Claims**

1. A herbicidal agent containing a mixture of a cyclohexane-1,3-dione derivative of the formula I

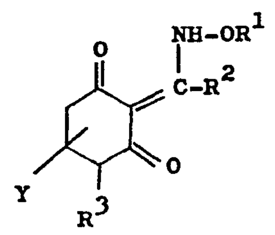

(I)

where

$R^1$ is straight-chain or branched alkyl of 1 to 4 carbon atoms, which can be substituted by alkoxy, alkylthio of up to 4 carbon atoms or alkoxycarbonyl of up to 5 carbon atoms, or straight-chain or branched alkenyl or alkynyl of up to 4 carbon atoms or benzyl,

$R^2$ is hydrogen or straight-chain or branched alkyl of 1 to 4 carbon atoms,

$R^3$ is hydrogen or alkoxycarbonyl of 2 to 5 carbon atoms, and

Y is the radical $R^4SX$—, where

$R^4$ is alkyl of up to 4 carbon atoms, unsubstituted phenyl or phenyl of benzyl each of which is substituted by halogen or alkyl or alkoxy of up to 4 carbon atoms, and

X is straight-chain or branched alkylene of up to 4 carbon atoms,

or of a metal salt, an ammonium salt optionally substituted by alkyl or benzyl, or a hydrate of this cyclohexane-1,3-dione derivative, and a 3,6-dichloro-2-picolinic acid derivative of the formula II

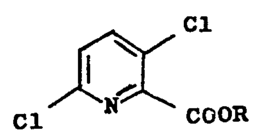

(II)

where R is hydrogen or straight-chain or branched alkyl of 1 to 4 carbon atoms, or a metal salt, the ammonium salt, an alkylammonium salt or a hydroxyalkylammonium salt of the acid.

2. A herbicidal agent as claimed in claim 1, wherein the cyclohexane-1,3-dione derivative of the formula I is 2-(1-ethoxy-aminobutylidene)-5-(2-ethylthiopropyl)-cyclohexane-1,3-dione.

3. A herbicidal agent as claimed in claim 1, wherein the 3,6-dichloro-2-picolinic acid derivative of the formula II is the monoethanolammonium salt of 3,6-dichloro-2-picolinic acid.

4. A herbicidal agent as claimed in claim 1, wherein the weight ratio of cyclohexane-1,3-dione derivative of the formula I to 3,6-dichloro-2-picolinic acid derivative of the formula II is from 1 : 0.06 to 1 : 5.

5. A herbicidal agent as claimed in claim 1, wherein the weight ratio of cyclohexane-1,3-dione derivative of the formula I to 3,6-dichloro-2-picolinic acid derivative of the formula II is from 1 : 0.25 to 1 : 3.

6. A process for combating the growth of unwanted plants, wherein the location of the unwanted plants is treated before emergence of the plants, or the plants are treated after emergence with a herbicidally effective amount of a herbicidal agent as claimed in claim 1.

7. The use of a herbicidal agent as claimed in claim 1 for combating unwanted plant growth.

**Revendications**

1. Agents herbicides, contenant un mélange d'un dérivé de cyclohexane-1,3-dione de formule I

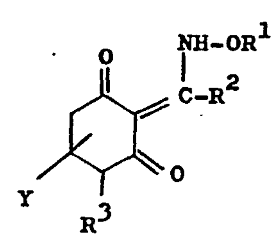

(I)

dans laquelle

$R^1$ représente un reste alkyle ramifié ou non ramifié, ayant 1 à 4 atomes de carbone, qui peut être substitué par alcoxy, alkylthio ayant jusqu'à 4 atomes de carbone ou alcoxycarbonyle ayant jusqu'à 5

atomes de carbone, un reste alcényle ou alkinyle, ramifié ou non, ayant jusqu'à 4 atomes de carbone, ou benzyle,

$R^2$ représente hydrogène ou un reste alkyle ramifié ou non, ayant 1 à 4 atomes de carbone,

$R^3$ hydrogène ou un reste alcoxycarbonyle ayant 2 à 5 atomes de carbone, et

Y le reste $R^4SX$—, dans lequel

$R^4$ représente un groupe alkyle ayant jusqu'à 4 atomes de carbone, phényle, un groupe phényle ou benzyle substitué par halogène, alkyle ou alcoxy ayant jusqu'à 4 atomes de carbone et

X représente un groupe alkylène ramifié ou non, ayant jusqu'à 4 atomes de carbone, ou d'un sel métallique ou sel d'ammonium éventuellement substitué par alkyle ou benzyle ou d'un hydrate de ce dérivé de cyclohexane-1,3-dione et d'un dérivé d'acide 3,6-dichloro-2-picolinique de formule II

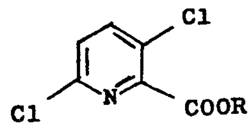

(II)

dans laquelle R représente hydrogène ou un reste alkyle, ramifié ou non, ayant 1 à 4 atomes de carbone ou d'un sel métallique, sel d'ammonium, sel d'alkylammonium ou sel d'hydroxyalkylammonium de l'acide.

2. Agents herbicides selon la revendication 1, caractérisés par le fait qu'ils contiennent, comme dérivé de cyclohexan-1,3-dione de formule I, la 2-(1-éthoxyaminobutyliden)-5-(2-éthylthiopropyl)-cyclohexan-1,3-dione.

3. Agents herbicides selon la revendication 1, caractérisés par le fait qu'ils contiennent, comme dérivé d'acide 3,6-dichloro-2-picolinique de formule II, le sel de monoéthanolammonium de l'acide 3,6-dichloro-2-picolinique.

4. Agents herbicides selon la revendication 1, caractérisés par le fait que le rapport de mélange du dérivé de cyclohexan-1,3-dione de formule I : dérivé d'acide 3,6-dichloro-2-picolinique de formule II est de 1/0,06 à 1/5 parties en poids.

5. Agents herbicides selon la revendication 1, caractérisés par le fait que le rapport de mélange du dérivé de cyclohexan-1,3-dione de formule I : dérivé d'acide 3,6-dichloro-2-picolinique de formule II est de 1/0,25 à 1/3 parties en poids.

6. Procédé de lutte contre la croissance de plantes indésirables, caractérisé par le fait que l'on traite le lieu d'implantation des plantes indésirables, avant la levée des plantes, ou les plantes, après la levée, avec une quantité, efficace au point de vue herbicide, d'un agent herbicide selon la revendication 1.

7. Utilisation d'agents herbicides selon la revendication 1 pour la lutte contre la croissance de plantes indésirables.